# FASCICULE DE BREVET EUROPEEN

(11) **EP 4 351 025 B1**
(45) Date de publication et mention de la délivrance du brevet: **12.03.2025**
(21) Numéro de dépôt: 23194217.8
(22) Date de dépôt: 30.08.2023
(51) Int. Cl.: H04B 5/48, H04B 1/00, H04W 52/02, H04W 84/18, H04W 88/06

(54) **APPAREIL DE COMMUNICATION SANS FIL CONFIGURÉ POUR COMMUNIQUER EN ULTRA LARGE BANDE**
DRAHTLOSKOMMUNIKATIONSVORRICHTUNG MIT KONFIGURATION ZUR KOMMUNIKATION ÜBER ULTRABREITBAND
WIRELESS COMMUNICATION APPARATUS CONFIGURED TO COMMUNICATE IN ULTRA-WIDEBAND

(30) Priorité: 08.09.2022 FR 2208995
(43) Date de publication de la demande: 10.04.2024
(73) Titulaire: STMicroelectronics (Rousset) SAS, 13790 Rousset (FR)
(72) Inventeur: TRAMONI, Alexandre, 83330 LE BEAUSSET (FR)
(74) Mandataire: Casalonga

(56) Documents cités:
- CN-A- 114 430 543

## Description

Des modes de réalisation et de mise en œuvre concernent la communication sans contact, et plus particulièrement à la technologie ultra large bande.

La communication par ultra large bande est une méthode de modulation radio reposant sur la transmission d'impulsions de très courte durée, souvent inférieure à la nanoseconde, et sur un large spectre de fréquence. Ainsi, la bande passante peut atteindre de très grandes valeurs.

En particulier, l'ultra large bande peut utiliser diverses méthodes d'impulsion. Par exemple, l'ultra large bande peut utiliser la modulation en position d'impulsions (PPM pour Pulse Position Modulation), la modulation OOK (« On Off Keying », ou « tout ou rien ») ou encore modulation bi-phase. L'ultra large bande peut être utilisé sur une bande de fréquence comprise entre 6GHz et 10GHz, par exemple de l'ordre de 8GHz.

Un appareil servant d' « ancre » utilisé pour la communication ultra large bande est configuré pour détecter des impulsions ultra large bande émises par un appareil servant de balise (en anglais « tag ») situé à proximité. En particulier, un appareil servant d' « ancre » peut être utilisé pour localiser des appareils ciblés situés à proximité. La communication par ultra large bande peut par exemple être utilisée pour ouvrir une voiture à distance de manière sécurisée. La communication par ultra large bande peut également être utilisée pour la géolocalisation en intérieur.

La communication par ultra large bande consomme une quantité importante d'énergie. En effet, les impulsions sont émises régulièrement avec une puissance élevée. Ainsi, il est courant de mettre hors tension l'unité de communication ultra large bande d'un appareil afin de réduire sa consommation d'énergie, lorsque la communication ultra large bande n'est pas souhaitée.

Pour démarrer une communication entre un appareil servant d' « ancre » et un appareil ciblé servant de balise, la phase de transmission de l'appareil servant d' « ancre » doit correspondre à la phase de réception de l'appareil ciblé. Pour assurer cette synchronisation, il est courant d'utiliser une unité de réveil radio (connue également par l'expression anglo-saxonne « wake-up radio ») pour réveiller, et donc mettre sous tension, l'unité de communication ultra large bande. Il est notamment connu d'utiliser une unité de communication par Bluetooth^{®} comme unité de réveil radio pour réveiller l'unité de communication ultra large bande.

Dans certains appareils, notamment dans les téléphones mobiles, le Bluetooth^{®} n'est disponible uniquement lorsque l'appareil est allumé. Ainsi, il est alors impossible d'activer la communication par ultra large bande lorsque l'appareil est éteint.

Par ailleurs, dans certains autres appareils, tels que les Airtag^{®} de la société Apple Inc., l'unité de communication par Bluetooth^{®} est utilisée uniquement comme unité de réveil radio pour la communication par ultra large bande. Dans ce cas, l'unité de communication par Bluetooth^{®} se révèle encombrante dans l'appareil.

Le document CN114430543 vise à fournir une configuration de circuit capable de réveiller une unité UWB d'un dispositif terminal à partir d'une unité Bluetooth lorsque le terminal est dans un état d'arrêt. L'unité Bluetooth du terminal mobile est utilisée pour surveiller et recevoir un signal Bluetooth envoyé par un objet cible et ensuite réveiller l'unité UWB pour effectuer une communication ultra large bande avec l'objet cible.

Il existe donc un besoin de proposer une solution peu consommatrice d'énergie permettant à un appareil de démarrer une communication ultra large bande, même lorsque cet appareil est éteint.

L'invention est définie dans la revendication indépendante 1.

Selon un aspect, il est proposé un appareil de communication sans fil comportant :
- une batterie,
- une plateforme alimentée par la batterie, la plateforme comprenant un processeur,
- un régulateur de tension alimenté par la batterie,
- une unité de communication ultra large bande alimentée par le régulateur de tension à partir de la plateforme lorsque la plateforme est mise sous tension,
- une unité de communication en champ proche alimentée directement par la batterie, et étant configurée pour commander le régulateur de tension pour alimenter l'unité de communication ultra large bande lorsque la plateforme est mise hors tension.

Ainsi, l'appareil est configuré pour démarrer une communication ultra large bande à partir de l'unité de communication en champ proche lorsque la plateforme est mise hors tension. L'unité de communication en champ proche peut ainsi être utilisée comme unité de réveil radio lorsque la plateforme est mise hors tension et éteinte. En particulier, l'alimentation de l'unité de communication en champ proche est maintenue même lorsque la plateforme est mise hors tension, car cette unité est directement alimentée par la batterie. Ainsi, l'unité de communication ultra large bande peut être réveillée par l'unité de communication en champ proche lorsque la plateforme est mise hors tension. Une fois l'unité de communication ultra large bande alimentée, cette dernière peut procéder à un sondage pour détecter la présence d'un champ ultra large bande.

Dans un mode de réalisation avantageux, l'unité de communication en champ proche présente des entrées/sorties connectées à des entrées/sorties de l'unité de communication ultra large bande. De préférence, l'unité de communication en champ proche comporte un régulateur de tension alimenté directement par la batterie et configuré pour alimenter les entrées/sorties de l'unité de communication en champ proche et les entrées/sorties de l'unité de communication ultra large bande lorsque la plateforme est mise hors tension.

Avantageusement, les entrées/sorties de l'unité de communication en champ proche sont configurées pour transmettre une requête de sondage aux entrées/sorties de l'unité de communication ultra large bande, l'unité de communication ultra large bande étant configurée pour effectuer un sondage d'un champ ultra large bande lorsqu'elle reçoit une requête de sondage de l'unité de communication en champ proche.

Dans un mode de réalisation avantageux, l'unité de communication en champ proche comporte un compteur configuré pour décompter une période de sondage maximale pendant laquelle l'unité de communication ultra large bande peut effectuer le sondage de champ ultra large bande.

De préférence, l'unité de communication en champ proche est configurée pour être mise en veille si l'unité de communication ultra large bande ne détecte pas de champ ultra large bande pendant son sondage. Avantageusement, l'unité de communication en champ proche comporte un compteur configuré pour décompter une période de veille maximale pendant laquelle l'unité de communication en champ proche est mise en veille, l'unité de communication en champ proche étant configurée pour sortir de sa mise en veille à la fin de la période de veille maximale.

Avantageusement, la plateforme comporte une unité de gestion d'alimentation comprenant au moins un régulateur de tension.

Dans un mode de réalisation avantageux, l'unité de communication ultra large bande comporte une entrée d'alimentation d'entrées/sorties configurée pour alimenter ses entrées/sorties. De préférence, l'unité de communication en champ proche comporte une entrée d'alimentation secondaire et une sortie d'alimentation secondaire, et une entrée d'alimentation d'entrées/sorties configurée pour alimenter ses entrées/sorties, l'entrée d'alimentation secondaire étant connectée à un régulateur de l'unité de gestion d'alimentation, la sortie d'alimentation secondaire étant connectée à l'entrée d'alimentation d'entrées/sorties de l'unité de communication en champ proche et à l'entrée d'alimentation d'entrées/sorties de l'unité de communication ultra large bande.

De préférence, l'unité de communication en champ proche comporte en outre un commutateur entre l'entrée d'alimentation secondaire et la sortie d'alimentation secondaire, le commutateur étant configuré pour être fermé lorsque la plateforme est mise sous tension et pour être ouvert lorsque la plateforme est mise hors tension. Ainsi, lorsque la plateforme est mise sous tension, la tension générée par le régulateur de tension de l'unité de gestion d'alimentation est appliquée sur l'entrée d'alimentation d'entrées/sorties de l'unité de communication ultra large bande et sur l'entrée d'alimentation d'entrées/sorties de l'unité de communication en champ proche via l'entrée d'alimentation secondaire, le commutateur fermé et la sortie d'alimentation secondaire. Lorsque la plateforme est mise hors tension, la tension générée par le régulateur de tension de l'unité de communication en champ proche est appliquée sur l'entrée d'alimentation d'entrées/sorties de l'unité de communication ultra large bande et sur l'entrée d'alimentation d'entrées/sorties de l'unité de communication en champ proche via la sortie d'alimentation secondaire.

De préférence, l'appareil comporte en outre une porte logique de type 'OU' présentant :
- une première entrée connectée à une sortie de l'unité de gestion d'alimentation,
- une deuxième entrée connectée à une sortie de l'unité de communication en champ proche, et
- une sortie configurée pour commander le régulateur de tension, de sorte que le régulateur de tension est configuré pour être commandé par l'unité de gestion d'alimentation lorsque la plateforme est mise sous tension et par l'unité de communication en champ proche lorsque la plateforme est mise hors tension.

D'autres avantages et caractéristiques de l'invention apparaîtront à l'examen de la description détaillée de modes de réalisation, nullement limitatifs, et des dessins annexés sur lesquels :
[Fig 1]

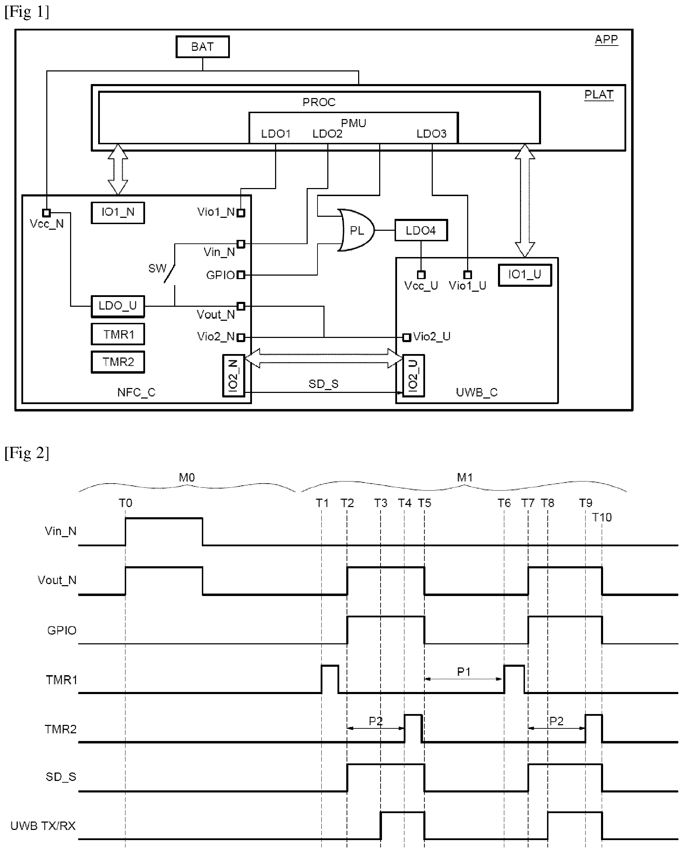

[Fig 2] illustrent des modes de réalisation et de mise en œuvre de l'invention.

La figure 1 illustre un appareil selon un mode de réalisation. L'appareil APP comporte une plateforme PLAT et une batterie BAT. L'appareil APP comporte également une unité de communication ultra large bande UWB_C et une unité de communication en champ proche NFC_C.

La plateforme PLAT comprend un processeur PROC et une unité de gestion d'alimentation PMU (en anglais « Power Management Unit »). L'unité de gestion d'alimentation PMU comprend différents régulateurs de tension LDO1, LDO2 et LDO3. Les régulateurs de tension LDO1, LDO2 et LDO3 sont notamment des régulateurs à faible chute de tension (en anglais « low-dropout regulator »).

L'unité de communication en champ proche NFC_C est configurée pour communiquer selon le protocole NFC (acronyme de l'anglais « Near-field communication »). En particulier, la communication en champ proche est une technologie de communication sans fil haute fréquence à faible distance, qui permet des échanges de données entre deux dispositifs sans contact sur une faible distance par exemple de l'ordre de 10 cm.

La technologie NFC est une plateforme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC.

L'unité de communication en champ proche NFC_C comporte une entrée d'alimentation générale Vcc_N connectée directement à la batterie BAT. L'unité de communication en champ proche NFC_C est donc alimentée directement par la batterie BAT.

L'unité de communication en champ proche NFC_C comporte également des premières entrées/sorties IO1_N connectées au processeur PROC. L'unité de communication en champ proche NFC_C comporte en outre une première entrée d'alimentation d'entrées/sorties Vio1_N. Cette première entrée d'alimentation d'entrées/sorties Vio1_N est connectée à un premier régulateur LDO1 de l'unité de gestion d'alimentation PMU du processeur PROC. Cette première entrée d'alimentation d'entrées/sorties Vio1_N est configurée pour alimenter les premières entrées/sorties IO1_N à partir de la tension générée par le premier régulateur LDO1. Une fois les premières entrées/sorties IO1_N alimentées, l'unité de communication en champ proche NFC_C peut alors communiquer avec le processeur PROC.

L'unité de communication en champ proche NFC_C comporte également des deuxièmes entrées/sorties IO2_N. L'unité de communication en champ proche NFC_C comporte en outre une deuxième entrée d'alimentation d'entrées/sorties Vio2_N. Cette deuxième entrée d'alimentation d'entrées/sorties Vio2_N est configurée pour alimenter les deuxièmes entrées/sorties IO2_N.

L'unité de communication en champ proche NFC_C comporte en outre un régulateur de tension LDO_U. Le régulateur de tension LDO_U est notamment un régulateur à faible chute de tension. L'unité de communication en champ proche NFC_C comporte aussi une sortie d'alimentation secondaire Vout_N. La sortie Vout_N est connectée à la sortie du régulateur de tension LDO_U. La sortie Vout_N est également connectée à la deuxième entrée d'alimentation d'entrées/sorties Vio2_N.

L'unité de communication en champ proche NFC_C comporte en outre une entrée d'alimentation secondaire Vin_N, une sortie GPIO et une sortie Vio2_N. L'entrée Vin_N est connectée à un deuxième régulateur de tension LDO2 de l'unité de gestion d'alimentation PMU.

L'unité de communication en champ proche NFC_C comporte en outre un commutateur SW entre l'entrée Vin_N et la sortie Vout_N. Le commutateur SW est configuré pour être fermé lorsque la plateforme PLAT est mise sous tension et pour être ouvert lorsque la plateforme PLAT est mise hors tension.

L'unité de communication ultra large bande est configurée pour pouvoir communiquer en ultra large bande. La communication par ultra large bande est une méthode de modulation radio reposant sur la transmission d'impulsions de très courte durée, souvent inférieure à la nanoseconde, et sur un large spectre de fréquence. Ainsi, la bande passante peut atteindre de très grandes valeurs. En particulier, l'ultra large bande peut utiliser diverses méthodes d'impulsion. Par exemple, l'ultra large bande peut utiliser la modulation en position d'impulsions (PPM pour Pulse Position Modulation), la modulation OOK (« On Off Keying », ou « tout ou rien ») ou encore modulation bi-phase. L'ultra large bande peut être utilisé sur une bande de fréquence comprise entre 6GHz et10GHz, par exemple de l'ordre de 8GHz.

L'unité de communication ultra large bande UWB_C comporte une entrée d'alimentation générale Vcc_U, une première entrée d'alimentation d'entrées/sorties Vio1_U et une deuxième entrée d'alimentation d'entrées/sorties Vio2_U.

L'unité de communication ultra large bande UWB_C comporte en outre des premières entrées/sorties IO1_U et des deuxièmes entrées/sorties IO2_U.

Les premières entrées/sorties IO1_U de l'unité de communication ultra large bande UWB_C sont connectées au processeur PROC. Les premières entrées/sorties IO1_U de l'unité de communication ultra large bande UWB_C sont alimentées via sa première entrée d'alimentation d'entrées/sorties Vio1_U. La première entrée d'alimentation Vio1_U est connectée à un troisième régulateur de tension LDO3 de l'unité de gestion d'alimentation PMU. Une fois les premières entrées/sorties IO1_U alimentées, l'unité de communication ultra large bande UWB_C peut alors communiquer avec le processeur PROC.

Les deuxièmes entrées/sorties IO2_U de l'unité de communication ultra large bande UWB_C sont connectées aux deuxièmes entrées/sorties IO2_N de l'unité de communication en champ proche NFC_C, notamment via un bus « SPI » (acronyme de l'anglais « Serial Peripheral Interface »). Les deuxièmes entrées/sorties IO2_U de l'unité de communication ultra large bande UWB_C sont alimentées via sa deuxième entrée d'alimentation d'entrées/sorties Vio2_U.

L'unité de communication en champ proche NFC_C est configurée pour transmettre une requête de sondage SD_S à l'unité de communication ultra large bande UWB_C via la connexion entre les deuxièmes entrées/sorties IO2_N de l'unité de communication en champ proche NFC_C et les deuxièmes entrées/sorties IO2_U de l'unité de communication ultra large bande UWB_C. La requête de sondage SD_S permet à l'unité de communication ultra large bande UWB_C de savoir qu'elle doit effectuer un sondage d'un champ ultra large bande après avoir été réveillée par l'unité de communication en champ proche NFC_C.

La deuxième entrée d'alimentation d'entrées/sorties Vio2_U de l'unité de communication ultra large bande UWB_C est connectée à la deuxième entrée d'alimentation d'entrée/sortie Vio2_N et à la sortie Vout_N de l'unité de communication en champ proche NFC_C.

L'appareil comporte en outre un régulateur de tension LDO4. Ce régulateur de tension LDO4 est notamment un régulateur à faible chute de tension. L'entrée d'alimentation générale Vcc_U de l'unité de communication ultra large bande UWB_C est connectée à la sortie de ce régulateur de tension LDO4. Le régulateur de tension LDO4 est externe à l'unité de gestion d'alimentation PMU.

L'appareil également une porte logique PL de type 'OU'. La porte 'OU' présente une première entrée connectée à l'unité de gestion d'alimentation PMU et une deuxième entrée connectée à la sortie GPIO de l'unité de communication en champ proche NFC_C. La porte 'OU' présente en outre une sortie connectée du régulateur LDO4. Le régulateur de tension LDO4 peut donc être commandé soit par l'unité de gestion d'alimentation PMU soit par la sortie GPIO de l'unité de communication en champ proche NFC_C.

L'unité de communication en champ proche NFC_C peut être mise en veille. Elle comporte en outre un premier compteur TMR1 configuré pour décompter une période maximale de mise en veille.

L'unité de communication en champ proche NFC_C comporte également un deuxième compteur TMR2 configuré pour décompter une période maximale de sondage du champ ultra large bande.

Lorsque la plateforme PLAT est mise sous tension, l'unité de gestion d'alimentation PMU est mise sous tension. Les régulateurs de tension LDO1, LDO2 et LDO3 génère alors des tensions. L'unité de gestion d'alimentation génère également un signal délivré en entrée de la porte logique 'OU', puis au régulateur de tension LDO4. Ainsi, le régulateur de tension LDO4 génère une tension qui est appliquée sur l'entrée d'alimentation générale Vcc_U de l'unité de communication ultra large bande UWB_C. L'unité de communication ultra large bande UWB_C est alors alimentée. De même, le régulateur de tension LDO3 génère une tension qui est appliquée sur la première entrée d'alimentation d'entrées/sorties Vio1_U. De la sorte, les premières entrées/sorties IO1_U sont alimentées et peuvent communiquer avec le processeur PROC.

Lorsque la plateforme PLAT est mise sous tension, le régulateur de tension LDO1 génère une tension appliquée sur la première entrée d'alimentation d'entrées/sorties Vio1_N de l'unité de communication en champ proche NFC_C. De la sorte, les premières entrées/sorties IO1_N de l'unité de communication en champ proche NFC_C sont alimentées. L'unité de communication en champ proche NFC_C peut donc communiquer avec le processeur PROC. Le régulateur de tension LDO2 génère une tension appliquée sur l'entrée Vin_N. Le commutateur SW étant fermé lorsque la plateforme PLAT est mise sous tension, cette tension est également appliquée sur la sortie Vout_N, et donc sur la deuxième entrée d'alimentation d'entrées/sorties Vio2_N de l'unité de communication en champ proche NFC_N et sur la deuxième entrée d'alimentation d'entrées/sorties Vio2_U de l'unité de communication ultra large bande UWB_C. De la sorte, les deuxièmes entrées/sorties IO2_N de l'unité de communication en champ proche NFC_N et les deuxièmes entrées/sorties IO2_U de l'unité de communication ultra large bande UWB_C sont alimentées avec une même tension. Ainsi, l'unité de communication en champ proche NFC_C peut communiquer avec l'unité de communication ultra large bande UWB_C.

Lorsque la plateforme PLAT est mise hors tension, les régulateurs de tension LDO1, LDO2 et LDO3 de l'unité de gestion d'alimentation PMU ne peuvent plus être utilisés pour alimenter l'unité de communication ultra large bande UWB_C. Lorsque la plateforme PLAT est mise hors tension, l'alimentation de l'unité de communication en champ proche NFC_C est maintenue, car son entrée d'alimentation générale est directement connectée à la batterie.

Lorsque la plateforme PLAT est mise hors tension, l'unité de communication en champ proche est configurée pour générer un signal délivré par la sortie GPIO à la porte logique 'OU' puis au régulateur de tension LDO4. Le régulateur de tension LDO4 peut alors générer une tension qu'il applique à l'entrée d'alimentation générale Vcc_N de l'unité de communication ultra large bande UWB_C. Ainsi, l'unité de communication ultra large bande UWB_C est alimentée, et est donc réveillée.

Le commutateur SW est ouvert lorsque la plateforme PLAT est mise hors tension. En outre, le régulateur de tension LDO_U est capable de générer une tension lorsque la plateforme PLAT est mise hors tension. Cette tension peut alors être appliquée sur la sortie Vout_N, de façon à appliquer cette même tension sur l'entrée d'alimentation Vio2_N de l'unité de communication en champ proche NFC_C et sur l'entrée d'alimentation Vio2_U de l'unité de communication ultra large bande UWB_C. Cela permet ainsi d'alimenter les deuxièmes entrées/sorties IO2_N de l'unité de communication en champ proche NFC_C et les deuxièmes entrées/sorties IO2_U de l'unité de communication ultra large bande UWB_C.

L'unité de communication en champ proche NFC_C peut alors transmettre la requête de sondage SD_S à l'unité de communication ultra large bande UWB_C. Une fois la requête de sondage reçue, l'unité de communication ultra large bande UWB_C est configurée pour effectuer un sondage d'un champ ultra large bande.

Si l'unité de communication ultra large bande UWB_C détecte un champ ultra large bande durant la période de sondage décomptée par le compteur TMR2, alors l'unité de communication ultra large bande UWB_C est configurée pour démarrer une communication ultra large bande avec l'appareil ayant émis le champ ultra large bande.

Si l'unité de communication ultra large bande UWB_C ne détecte pas de champ ultra large bande durant la période de sondage décomptée par le compteur TMR2, alors l'unité de communication en champ proche NFC_C est configurée pour stopper le réveil de l'unité de communication ultra large bande UWB_C. L'unité de communication en champ proche NFC_C peut ensuite être mise en veille pendant la période de veille décomptée par le compteur TMR1.

Un tel appareil APP est donc configuré pour démarrer une communication ultra large bande à partir de l'unité de communication en champ proche NFC_C lorsque la plateforme PLAT est mise hors tension. En particulier, l'alimentation de l'unité de communication en champ proche NFC_C est maintenue même lorsque la plateforme PLAT est mise hors tension, car cette unité est directement alimentée par la batterie BAT. Ainsi, l'unité de communication ultra large bande UWB_C peut être réveillée par l'unité de communication en champ proche NFC_C lorsque la plateforme PLAT est mise hors tension. Une fois l'unité de communication ultra large bande UWB_C alimentée, cette dernière peut procéder à un sondage pour détecter la présence d'un champ ultra large bande.

La figure 2 illustre un diagramme de temps d'une mise en œuvre d'un appareil tel que décrit précédemment.

Dans un premier temps, la plateforme PLAT est mise sous tension. Le commutateur SW de l'unité de communication en champ proche NFC_C est alors fermé. Ainsi, à l'instant T0, l'entrée Vin_N de l'unité de communication en champ proche NFC_C reçoit une tension générée par le deuxième régulateur de tension LDO2. Cette tension reçue par l'entrée Vin_N est appliquée à la sortie Vout_N via le commutateur SW.

Ensuite, dans un second temps, la plateforme PLAT est mise hors tension. Le commutateur SW de l'unité de communication en champ proche NFC_C est alors ouvert. Le régulateur de tension LDO2 ne génère plus de tension. À l'instant T1, la tension sur l'entrée Vin_N de l'unité de communication en champ proche NFC_C est donc nulle. À la fin d'une période de mise en veille décomptée par le compteur TMR1, le régulateur de tension LDO_U génère, à l'instant T2, une tension qui est appliquée sur la sortie Vout_N de l'unité de communication en champ proche NFC_C. En outre, l'unité de communication en champ proche émet le signal GPIO pour réveiller l'unité de communication ultra large bande UWB_C, et émet la requête de sondage SD_S.

L'unité de communication ultra large bande UWB_C procède alors, à l'instant T3, à un sondage d'un champ ultra large bande (UWB TX/RX). Parallèlement, le deuxième compteur TMR2 décompte la période de sondage jusqu'à l'instant T4. Le sondage de champ ultra large bande est effectué jusqu'à la fin de la période de sondage, à l'instant T5. Ici, l'unité de champ ultra large bande UWB_C ne détecte aucun champ ultra large bande à la fin de la période P2 de sondage. Ainsi, le signal GPIO et le signal Vout_N s'arrêtent à la fin de la période de sondage, de sorte que l'unité de communication ultra large bande UWB_C n'est plus alimentée.

L'unité de communication en champ proche NFC_C peut ensuite être mise en veille pendant ladite période P1 de veille décomptée par le premier compteur TMR1 jusqu'à l'instant T6. Une fois la période de veille terminée, l'unité de communication en champ proche NFC_C sort de sa mise en veille. Ensuite, à l'instant T7, l'unité de communication en champ proche NFC_C émet de nouveau les signaux GPIO et Vout_N de façon à réveiller l'unité de communication ultra large bande UWB_C, et émet la requête de sondage SD_S. Une fois la requête de sondage reçue, l'unité de communication ultra large bande UWB_C procède de nouveau à un sondage à l'instant T8 pendant la période P2 de sondage décomptée par le deuxième compteur TMR2 jusqu'à l'instant T9. Le sondage se termine à l'instant T10.

## Revendications

1. Appareil de communication sans fil comportant :
- une batterie (BAT),
- une plateforme (PLAT) alimentée par la batterie (BAT), la plateforme comprenant un processeur (PROC),
- un régulateur de tension (LDO4) alimenté par la batterie (BAT),
- une unité de communication ultra large bande (UWB_C) alimentée par le régulateur de tension (LDO4) à partir de la plateforme (PLAT) lorsque la plateforme est mise sous tension,
- une unité de communication en champ proche (NFC_C) **caractérisé par le fait que** l'unité de communication en champ proche (NFC_C) est alimentée directement par la batterie (BAT), et est configurée pour commander le régulateur de tension (LDO4) pour alimenter l'unité de communication ultra large bande (UWB_C) lorsque la plateforme (PLAT) est mise hors tension.

2. Appareil selon la revendication 1, dans lequel l'unité de communication en champ proche (NFC_C) présente des entrées/sorties (IO2_N) connectées à des entrées/sorties (IO2_U) de l'unité de communication ultra large bande (UWB_C),
et dans lequel l'unité de communication en champ proche (NFC_C) comporte un régulateur de tension (LDO_U) alimenté directement par la batterie (BAT) et configuré pour alimenter les entrées/sorties (IO2_N) de l'unité de communication en champ proche (NFC_C) et les entrées/sorties (IO2_U) de l'unité de communication ultra large bande (UWB_C) lorsque la plateforme est mise hors tension.

3. Appareil selon la revendication 2, dans lequel les entrées/sorties de l'unité de communication en champ proche (NFC_C) sont configurées pour transmettre une requête de sondage (SD_S) aux entrées/sorties de l'unité de communication ultra large bande (UWB_C), l'unité de communication ultra large bande (UWB_C) étant configurée pour effectuer un sondage d'un champ ultra large bande lorsqu'elle reçoit une requête de sondage (SD_S) de l'unité de communication en champ proche (NFC_C).

4. Appareil selon la revendication 3, dans lequel l'unité de communication en champ proche (NFC_C) comporte un compteur (TMR2) configuré pour décompter une période de sondage maximale (P2) pendant laquelle l'unité de communication ultra large bande peut effectuer le sondage de champ ultra large bande.

5. Appareil selon l'une des revendications 3 ou 4, dans lequel l'unité de communication en champ proche (NFC_C) est configurée pour être mise en veille si l'unité de communication ultra large bande (UWB_C) ne détecte pas de champ ultra large bande pendant son sondage, et dans lequel l'unité de communication en champ proche (NFC_C) comporte un compteur (TMR1) configuré pour décompter une période de veille maximale (P1) pendant laquelle l'unité de communication en champ proche (NFC_C) est mise en veille, l'unité de communication en champ proche (NFC_C) étant configurée pour sortir de sa mise en veille à la fin de la période de veille maximale (P1).

6. Appareil selon l'une des revendications 1 à 5, dans lequel la plateforme comporte une unité de gestion d'alimentation (PMU) comprenant au moins un régulateur de tension (LDO1, LDO2, LDO3).

7. Appareil selon l'une des revendications 2 à 6, dans lequel l'unité de communication ultra large bande comporte une entrée d'alimentation d'entrées/sorties (Vio2_U) configurée pour alimenter ses entrées/sorties (IO2_U),
dans lequel l'unité de communication en champ proche comporte une entrée d'alimentation secondaire (Vin_N) et une sortie d'alimentation secondaire (Vout_N), et une entrée d'alimentation d'entrées/sorties (Vio2_N) configurée pour alimenter ses entrées/sorties (IO2_N), l'entrée d'alimentation secondaire (Vin_N) étant connectée à un régulateur (LDO2) de l'unité de gestion d'alimentation (PMU), la sortie d'alimentation secondaire (Vout_N) étant connectée à l'entrée d'alimentation d'entrées/sorties (Vio2_N) de l'unité de communication en champ proche (NFC_C) et à l'entrée d'alimentation d'entrées/sorties (Vio2_U) de l'unité de communication ultra large bande (UWB_C),
et dans lequel l'unité de communication en champ proche comporte en outre un commutateur (SW) entre l'entrée d'alimentation secondaire (Vin_N) et la sortie d'alimentation secondaire (Vout_N), le commutateur étant configuré pour être fermé lorsque la plateforme est mise sous tension et pour être ouvert lorsque la plateforme est mise hors tension.

8. Appareil selon l'une des revendications 6 ou 7, comportant en outre une porte logique de type 'OU' présentant :
- une première entrée connectée à une sortie de l'unité de gestion d'alimentation,
- une deuxième entrée connectée à une sortie (GPIO) de l'unité de communication en champ proche, et
- une sortie configurée pour commander le régulateur de tension (LDO4),
de sorte que le régulateur de tension (LDO4) est configuré pour être commandé par l'unité de gestion d'alimentation lorsque la plateforme est mise sous tension et par l'unité de communication en champ proche lorsque la plateforme est mise hors tension.

## Patentansprüche

1. Drahtlose Kommunikationsvorrichtung, die Folgendes umfasst:
- eine Batterie (BAT),
- eine Plattform (PLAT), die von der Batterie (BAT) mit Strom versorgt wird, wobei die Plattform einen Prozessor (PROC) umfasst,
- einen Spannungsregler (LDO4), der von der Batterie (BAT) mit Strom versorgt wird,
- eine Ultra-Breitband-Kommunikationseinheit (UWB_C), die vom Spannungsregler (LDO4) von der Plattform (PLAT) mit Strom versorgt wird, wenn die Plattform eingeschaltet wird,
- eine Nahfeldkommunikationseinheit (NFC_C), **dadurch gekennzeichnet, dass** die Nahfeldkommunikationseinheit (NFC_C)
direkt von der Batterie (BAT) mit Strom versorgt wird und so konfiguriert ist, dass sie den Spannungsregler (LDO4) so steuert, dass er die Ultra-Breitband-Kommunikationseinheit (UWB_C) mit Strom versorgt, wenn die Plattform (PLAT) ausgeschaltet ist.

2. Vorrichtung nach Anspruch 1, wobei die Nahfeldkommunikationseinheit (NFC_C) Eingänge/Ausgänge (IO2_N) aufweist, die mit Eingängen/Ausgängen (IO2_U) der Ultra-Breitband-Kommunikationseinheit (UWB_C) verbunden sind,
und wobei die Nahfeldkommunikationseinheit (NFC_C) einen Spannungsregler (LDO_U) umfasst, der direkt von der Batterie (BAT) mit Strom versorgt wird und so konfiguriert ist, dass er die Eingänge/Ausgänge (IO2_N) der Nahfeldkommunikationseinheit (NFC_C) und die Eingänge/Ausgänge (IO2_U) der Ultra-Breitband-Kommunikationseinheit (UWB_C) mit Strom versorgt, wenn die Plattform ausgeschaltet ist.

3. Vorrichtung nach Anspruch 2, wobei die Eingänge/Ausgänge der Nahfeldkommunikationseinheit (NFC_C) so konfiguriert sind, dass sie eine Überprüfungsanforderung (SD_S) an die Eingänge/Ausgänge der Ultra-Breitband-Kommunikationseinheit (UWB_C) übertragen, wobei die Ultra-Breitband-Kommunikationseinheit (UWB_C) so konfiguriert ist, dass sie eine Überprüfung eines Ultra-Breitbandfelds durchführt, wenn sie eine Überprüfungsanforderung (SD_S) von der Nahfeldkommunikationseinheit (NFC_C) empfängt.

4. Vorrichtung nach Anspruch 3, wobei die Nahfeldkommunikationseinheit (NFC_C) einen Zähler (TMR2) umfasst, der so konfiguriert ist, dass er eine maximale Sondierungsperiode (P2) herunterzählt, während der die Ultra-Breitband-Kommunikationseinheit die Ultra-Breitband-Feldsondierung durchführen kann.

5. Vorrichtung nach einem der Ansprüche 3 oder 4, wobei die Nahfeldkommunikationseinheit (NFC_C) so konfiguriert ist, dass sie in den Standby-Modus versetzt wird, wenn die Ultra-Breitband-Kommunikationseinheit (UWB_C) während ihrer Sondierung kein Ultra-Breitbandfeld erkennt, und wobei die Nahfeldkommunikationseinheit (NFC_C) einen Zähler (TMR1) umfasst, der so konfiguriert ist, dass er eine maximale Standby-Periode (P1) herunterzählt, während der die Nahfeldkommunikationseinheit (NFC_C) in den Standby-Modus versetzt wird, wobei die Nahfeldkommunikationseinheit (NFC_C) so konfiguriert ist, dass sie am Ende der maximalen Standby-Periode (P1) ihren Standby-Modus verlässt.

6. Vorrichtung nach einem der Ansprüche 1 bis 5, wobei die Plattform eine Stromversorgungs-Management-Einheit (PMU) umfasst, die mindestens einen Spannungsregler (LDO1, LDO2, LDO3) umfasst.

7. Vorrichtung nach einem der Ansprüche 2 bis 6, wobei die Ultra-Breitband-Kommunikationseinheit einen Eingange zur Stromversorgung von Eingängen/Ausgängen (Vio2_U) umfasst, der so konfiguriert ist, dass er seine Eingänge/Ausgänge (IO2_U) mit Strom versorgt,
wobei die Nahfeldkommunikationseinheit einen sekundären Stromversorgungseingang (Vin_N) und einen sekundären Stromversorgungsausgang (Vout_N) und einen Eingang zur Stromversorgung von Eingängen/Ausgängen (Vio2_N) umfasst, der so konfiguriert ist, dass er seine Eingänge/Ausgänge (IO2_N) mit Strom versorgt, wobei der sekundäre Stromversorgungseingang (Vin_N) mit einem Regler (LDO2) der Stromversorgungs-Management-Einheit (PMU) verbunden ist, wobei der sekundäre Stromversorgungsausgang (Vout_N) mit dem Eingang zur Stromversorgung von Eingängen/Ausgängen (Vio2_N) der Nahfeldkommunikationseinheit (NFC_C) und mit dem Eingang zur Stromversorgung von Eingängen/Ausgängen (Vio2_U) der Ultra-Breitband-Kommunikationseinheit (UWB_C) verbunden ist,
und wobei die Nahfeldkommunikationseinheit ferner einen Schalter (SW) zwischen dem sekundären Stromversorgungseingang (Vin_N) und dem sekundären Stromversorgungsausgang (Vout_N) umfasst, wobei der Schalter so konfiguriert ist, dass er geschlossen ist, wenn die Plattform eingeschaltet wird, und dass er geöffnet ist, wenn die Plattform ausgeschaltet wird.

8. Vorrichtung nach einem der Ansprüche 6 oder 7, die ferner ein Logik-Gatter vom Typ "ODER" umfasst, das Folgendes aufweist:
- einen ersten Eingang, der mit einem Ausgang der Stromversorgungs-Management-Einheit verbunden ist,
- einen zweiten Eingang, der mit einem Ausgang (GPIO) der Nahfeldkommunikationseinheit verbunden ist, und
- einen Ausgang, der so konfiguriert ist, dass er den Spannungsregler (LDO4) so steuert,
dass der Spannungsregler (LDO4) so konfiguriert ist, dass er von der Stromversorgungs-Management-Einheit gesteuert wird, wenn die Plattform eingeschaltet wird, und von der Nahfeldkommunikationseinheit, wenn die Plattform ausgeschaltet wird.

## Claims

1. A wireless communication device including:
- a battery (BAT),
- a platform (PLAT) powered by the battery (BAT), the platform comprising a processor (PROC),
- a voltage regulator (LDO4) powered by the battery (BAT),
- an ultra wideband communication unit (UWB_C) powered by the voltage regulator (LDO4) from the platform (PLAT) when the platform is switched on,
- a near-field communication unit (NFC_C) **characterised in that** the near-field communication unit (NFC_C) is powered directly from the battery (BAT), and is configured to control the voltage regulator (LDO4) to power the ultra wideband communication unit (UWB_C) when the platform (PLAT) is switched off.

2. The apparatus according to claim 1, wherein the near-field communication unit (NFC_C) has inputs/outputs (IO2_N) connected to inputs/outputs (IO2_U) of the ultra wideband communication unit (UWB_C),
and wherein the near-field communication unit (NFC_C) includes a voltage regulator (LDO_U) directly powered by the battery (BAT) and configured to power the inputs/outputs (IO2_N) of the near-field communication unit (NFC_C) and the inputs/outputs (IO2_U) of the ultra wideband communication unit (UWB_C) when the platform is switched off.

3. The apparatus according to claim 2, wherein the inputs/outputs of the near-field communication unit (NFC_C) are configured to transmit a poll request (SD_S) to the inputs/outputs of the ultra wideband communication unit (UWB_C), the ultra wideband communication unit (UWB_C) being configured to poll an ultra wideband field when it receives a poll request (SD_S) from the near-field communication unit (NFC_C).

4. The apparatus according to claim 3, wherein the near-field communication unit (NFC_C) includes a timer (TMR2) configured to time a maximum polling period (P2) during which the ultra wideband communication unit can perform the ultra wideband field poll.

5. The apparatus according to any of claims 3 or 4, wherein the near-field communication unit (NFC_C) is configured to be put on standby if the ultra wideband communication unit (UWB_C) does not detect an ultra wideband field during its poll, and wherein the near-field communication unit (NFC_C) includes a timer (TMR1) configured to time a maximum standby period (P1) during which the near-field communication unit (NFC_C) is put on standby, the near-field communication unit (NFC_C) being configured to leave its standby at the end of the maximum standby period (P1).

6. The apparatus according to any of claims 1 to 5, wherein the platform includes a power management unit (PMU) comprising at least one voltage regulator (LDO1, LDO2, LDO3).

7. The apparatus according to one according to claims 2 to 6, wherein the ultra wideband communication unit includes an input/output power input (Vio2_U) configured to power its inputs/outputs (IO2_U),
wherein the near-field communication unit includes a secondary power input (Vin_N) and a secondary power output (Vout_N), and an input/output power input (Vio2_N) configured to power its inputs/outputs (IO2_N), the secondary power input (Vin_N) being connected to a regulator (LDO2) of the power management unit (PMU), the secondary power output (Vout_N) being connected to the input/output power input (Vio2_N) the near-field communication unit (NFC_C) and the input/output power input (Vio2_U) of the ultra wideband communication unit (UWB_C),
and wherein the near-field communication unit further includes a switch (SW) between the secondary power input (Vin_N) and the secondary power output (Vout_N), the switch being configured to be closed when the platform is switched on and to be open when the platform is switched off.

8. The apparatus according to one according to claims 6 or 7, further comprising an 'OR' type logic gate having:
- a first input connected to an output of the power management unit,
- a second input connected to an output (GPIO) of the near-field communication unit, and
- an output configured to control the voltage regulator (LDO4),
so that the voltage regulator (LDO4) is configured to be controlled by the power management unit when the platform is switched on and by the near-field communication unit when the platform is switched off.
